# EUROPÄISCHE PATENTANMELDUNG

(11) **EP 4 826 578 A1**
(43) Veröffentlichungstag der Anmeldung: **21.10.2026**
(21) Anmeldenummer: 26167691.0
(22) Anmeldetag: 25.03.2026
(51) Int. Cl.: G06F 21/32, G06F 21/62

(54) **VERFAHREN ZUR ANONYMISIERTEN KONTEXTGEBUNDENEN AUTHENTIFIZIERUNG EINER PERSON MITTELS EINES BIOMETRISCHEN TEMPLATES, SYSTEM ZUR DURCHFÜHRUNG DES VERFAHRENS UND COMPUTERPROGRAMMPRODUKT MIT COMPUTERLESBAREM PROGRAMMCODE**

(30) Priorität: 18.04.2025 DE 102025115360
(71) Anmelder: Modi Modular Digits GmbH, 51674 Wiehl (DE)
(72) Erfinder: KLAWUNDER, Dieter, 51580 Reichshof-Zimmerseifer (DE)
(74) Vertreter: Rebbereh, Cornelia

(57) **Zusammenfassung**

Bei einem Verfahren zur anonymisierten kontextgebundenen Authentifizierung einer Person mittels eines biometrischen Templates, werden die folgenden Schritte durchgeführt: a) Erfassen eines Gesichtsbildes der Person, b) Erzeugen eines biometrischen Templates aus dem Gesichtsbild, c) Umwandeln des Templates in ein ungeordnetes, strukturloses Bitmuster, d) Speichern des Bitmusters, e) Bestimmen und Speichern zumindest zweier kontextgebundener Parameter, umfassend ein zeitliches Gültigkeitsfenster, f) bei Auftreten einer Authentifizierungsanfrage Abfrage der zumindest zwei vorbestimmten kontextgebundenen Parameter, g) bei Vorliegen der zumindest zwei vorbestimmten kontextgebundenen Parameter temporäres Rekonstruieren des Templates aus dem Bitmuster, und h) Durchführen eines Abgleichs des rekonstruierten Templates mit einem aktuellen Livebild der Person zu deren Authentifizierung, wobei eine erfolgreiche Authentifizierung nur innerhalb des vorgegebenen zeitlichen Gültigkeitsfensters ermöglicht ist, also keine dauerhafte Identifikation der Person ermöglicht wird.

## Beschreibung

Die Erfindung betrifft ein Verfahren zur anonymisierten kontextgebundenen Authentifizierung einer Person mittels eines biometrischen Templates, ein System zur Durchführung des Verfahrens sowie ein Computerprogrammprodukt mit computerlesbarem Programmcode, der bei dessen Ausführung auf einem Computer diesen dazu veranlasst, das Verfahren auszuführen.

Biometrische Systeme zur Gesichtserkennung sind im Stand der Technik bekannt, wie beispielsweise aus der EP 2 551 788 A1. Diese offenbart ein Verfahren zur biometrischen Gesichtserkennung, bei dem zunächst in einer Bildvorverarbeitung die Größe und die Position des Gesichts im Bild auf vorgegebene Werte gebracht, danach mehrere Gabor-Filter angewendet werden, so dass eine entsprechende Zahl von Bildern entsteht, und danach von diesen Bildern die "Local Binary Patterns" berechnet werden. Zur Durchführung einer wenig speicherplatz- und rechenzeitintensiven Gesichtserkennung werden die "Local Binary Patterns" durch Hauptkomponentenanalyse (Principal Components Analysis) komprimiert und die so komprimierten Daten mit zuvor in gleicher Weise gebildeten Daten eines Referenzbildes verglichen. Der Vergleich kann innerhalb einer Chipkarte ("Matching on Chip") durchgeführt werden. Für die Ermittlung einer Person anhand eines Fotos und einer Fotokartei ist es aufgrund der hohen Geschwindigkeit geeignet, auch bei extrem großen Fotokarteien.

Aus der DE 60 217 597 T2 ist eine Personenerkennungsvorrichtung mit einer Authentifikationsdateneingabeeinheit bekannt, die ausgelegt ist zum Erfassen von Authentifikationsdaten, einem Verzeichnisspeicher, der ausgelegt ist zum Speichern von Verzeichnisdaten für die Authentifikation, einem Authentifikator, der ausgelegt ist zum Authentifizieren einer zu authentifizierenden Person basierend auf den Authentifikationsdaten, die von der Person durch die Authentifikationsdateneingabeeinheit erfasst worden sind, und den Verzeichnisdaten, die in dem Verzeichnisspeicher gespeichert sind, eine Bestimmungseinheit, die ausgelegt ist zum Bestimmen, ob die Verzeichnisdaten, die in dem Verzeichnisspeicher gespeichert sind, zu aktualisieren sind, wenn die zu authentisierende Person durch den Authentifikator authentifiziert worden ist, einer Verzeichnisaktualisierungseinheit, die ausgelegt ist zum Aktualisieren der Verzeichnisdaten, die durch die Bestimmungseinheit befunden worden sind aktualisiert zu werden, basierend auf den Authentifikationsdaten, die durch die Authentifikationsdateneingabeeinheit erfasst worden sind, und einem Verzeichnisaktualisierungsprotokollspeicher, der ausgelegt ist zum Speichern eines Verzeichnisaktualisierungsprotokolls, das die Inhalte der Verzeichnisdaten angibt, die durch die Verzeichnisaktualisierungseinheit aktualisiert worden sind. Ferner ist eine Anzeige ausgelegt, um einer zu authentifizierenden Person das Authentifikationsergebnis und das Verzeichnisaktualisierungsprotokoll der letzten Verzeichnisaktualisierung anzuzeigen, das in dem Verzeichnisaktualisierungsprotokollspeicher gespeichert ist, wenn die zu authentifizierende Person durch den Authentifikator authentifiziert worden ist.

Die DE 10 2007 053 650 A1 offenbart ein Verfahren zum Erkennen von berechtigten Nutzern an zumindest einem Zutritt und/oder zumindest einem Zugang, bei dem die von dem Nutzer erfassten biometrischen Eingabedaten mit gespeicherten biometrischen Daten von berechtigten Nutzern verglichen werden und bei dem bei Übereinstimmung der biometrischen Daten ein Zugangsberechtigungssignal ausgegeben wird. Das Zugangsberechtigungssignal wird als zentrales Ansteuersignal zum Betätigen zumindest einer Zutritts- und/oder zumindest einer Zugangseinrichtung ausgegeben. Biometrische Personendaten von berechtigten Personen werden neu erfasst und gespeichert.

Aus der DE 10 2016 105 820 A1 ist ein Verfahren bekannt, umfassend: Erfassen, durch Verwendung eines Prozessors, von biometrischen Benutzerinformationen mit einem biometrischen Erfassungsmodul, Erfassen von Umgebungsinformationen, umfassend einen erfassten Umgebungswert für das biometrische Erfassungsmodul entsprechend den biometrischen Benutzerinformationen, und Authentifizieren der biometrischen Benutzerinformationen, um eine Benutzeridentität mittels einer entsprechenden Authentifikationsvorlage der einen oder mehreren Authentifikationsvorlagen, die einen gegebenen Umgebungswertebereich umfasst, der den erfassten Umgebungswert umfasst, zu überprüfen.

Die DE 10 2017 121 069 A1 offenbart ein Verfahren, das Folgendes umfasst: Empfangen einer Transportanfrage an einem Fahrzeug, wobei die Transportanfrage einen Insassen und einen Abholort anzeigt, Fahren zum Abholort, Authentifizieren des Insassen am Abholort, als Reaktion auf das erfolgreiche Authentifizieren des Insassen: Entriegeln der Fahrzeugtüren, um den Zugang zum Fahrzeug zu erlauben, Ermitteln einer Anzahl an Menschen, die in das Fahrzeug einsteigen, und Bestätigen, dass die Anzahl an Menschen, die in das Fahrzeug einsteigen, einer Anzahl an Insassen, die der Transportanfrage zugeordnet sind, entspricht. Das Authentifizieren des Insassen am Abholort beinhaltet ferner Folgendes: Aufnehmen eines Bilds des Gesichts des Insassen unter Nutzung einer am Fahrzeug montierten Kamera, Identifizieren eines Bildes des Insassen in einem Benutzerprofil und Anwenden eines Gesichtserkennungsalgorithmus, um zu ermitteln, ob das aufgenommene Bild im Wesentlichen dem Bild im Benutzerprofil entspricht.

Aus der DE 10 2020 204 981 A1 ist ein Verfahren zur Erzeugung einer einzigartigen Benutzeridentifikation für die Verwendung in einer Vorrichtung mit den folgenden Schritten bekannt: Erfassen eines biometrischen Merkmals des Benutzers mit einer Erfassungsvorrichtung, Erzeugen eines Zeitstempels für den Vorgang der Erfassung des biometrischen Merkmals, Hinzufügen einer Geräte-Identifikation von der Erfassungsvorrichtung zu dem Zeitstempel, Berechnen eines Hash-Codes für die individuelle Zusammenstellung von Zeitstempel und Geräte-Identifikation, Abspeichern des Hash-Codes zusammen mit dem biometrischen Merkmal in der Vorrichtung. Die Erfassungsvorrichtung ist Teil einer mobilen Vorrichtung, wie eines Fahrzeugs, und zu der Geräte-Identifikation der Erfassungsvorrichtung ist eine individuell vergebene Identifikationsnummer, insbesondere Seriennummer der mobilen Vorrichtung, hinzugefügt. Der berechnete Hash-Code wird benutzt, um einerseits das in einer ersten Datenbank verzeichnete biometrische Merkmal zu identifizieren, mit dem das übertragene biometrische Merkmal verglichen wird, und um andererseits das in einer zweiten Datenbank verzeichnete Benutzerprofil zu finden, wenn der Vergleich zwischen dem verzeichneten und dem übertragenen biometrischen Merkmal eine Übereinstimmung ergab, wobei das so gefundene Benutzerprofil von dem Fahrzeug empfangen wird und zur dortigen Benutzung instanziiert wird.

Die bekannten biometrischen Systeme zur Gesichtserkennung speichern zumeist Templates, also biometrische Merkmalsmuster, in zentralen Datenbanken und ermöglichen durch deren Vergleich eine Identifikation oder Authentifizierung der betreffenden Person. Diese Vorgehensweise birgt jedoch erhebliche Datenschutzrisiken, insbesondere bei Missbrauch, Datenlecks oder unbefugtem Zugriff in sich. Zudem ist in vielen Anwendungsfällen keine vollständige Identifikation notwendig, sondern lediglich eine Verifikation von Berechtigungen, wie z.B. beim Zugang zu Veranstaltungen, beim Boarding zu Flügen, beim Zutritt zu Sicherheitsbereichen.

Der vorliegenden Erfindung liegt daher die Aufgabe zugrunde, ein Verfahren zur anonymisierten kontextgebundenen Authentifizierung einer Person mittels eines biometrischen Templates sowie ein System zur Durchführung des Verfahrens bereitzustellen, das eine zuverlässige Gesichtserkennung ermöglicht, ohne dass dabei personenbezogene Daten offengelegt oder gespeichert werden müssen, und das zugleich die volle Kontrolle über Nutzungsbedingungen, wie Zeit, Ort, Zweck und Gültigkeit der Nutzbarkeit der Daten, beim Datensubjekt selbst belässt, also der Person, deren biometrisches Template erfasst wird/wurde.

Die Aufgabe wird nach Anspruch 1 durch ein Verfahren zur anonymisierten kontextgebundenen Authentifizierung einer Person mittels eines biometrischen Templates durch die folgenden Schritte gelöst: a) Erfassen eines Gesichtsbildes der Person, b) Erzeugen eines biometrischen Templates aus dem Gesichtsbild, c) Umwandeln des Templates in ein ungeordnetes, strukturloses Bitmuster, d) Speichern des Bitmusters, e) Bestimmen und Speichern zumindest zweier kontextgebundener Parameter, umfassend ein zeitliches Gültigkeitsfenster, f) bei Auftreten einer Authentifizierungsanfrage Abfrage der zumindest zwei vorbestimmten kontextgebundenen Parameter, g) bei Vorliegen der zumindest zwei vorbestimmten kontextgebundenen Parameter temporäres Rekonstruieren des Templates aus dem Bitmuster, und h) Durchführen eines Abgleichs des rekonstruierten Templates mit einem aktuellen Livebild der Person zu deren Authentifizierung, wobei eine erfolgreiche Authentifizierung nur innerhalb des vorgegebenen zeitlichen Gültigkeitsfensters ermöglicht ist, also keine dauerhafte Identifikation der Person ermöglicht wird. Die Aufgabe wird auch durch ein System zur Durchführung des Verfahrens gelöst, das Folgendes umfasst: a) zumindest eine Einheit zur Erfassung biometrischer Daten, b) zumindest eine Verarbeitungseinheit zur Erzeugung eines biometrischen Templates aus den erfassten biometrischen Daten und Umwandlung in ein ungeordnetes, strukturloses Bitmuster, c) zumindest eine Speichereinheit zur temporären Speicherung des Bitmusters, d) zumindest eine Einheit zum Erfassen und Speichern von kontextgebundenen Parametern, e) eine Verifikationsstation oder ein Verifikationsgerät, die oder das zur Rekonstruktion des Templates autorisiert ist, f) zumindest ein Mittel zur Kontextprüfung und temporären Rekonstruktion des Templates aus dem Bitmuster, g) zumindest eine Einheit zum Erfassen eines Livebildes, und h) zumindest eine Auswerteeinheit zum biometrischen Abgleich des erfassten Livebildes mit dem rekonstruierten Template. Ferner wird die Aufgabe nach Anspruch 10 durch ein Computerprogrammprodukt mit computerlesbarem Programmcode gelöst, der bei dessen Ausführung auf einem Computer diesen dazu veranlasst, das vorstehende Verfahren auszuführen. Weiterbildungen der Erfindung sind in den abhängigen Ansprüchen definiert.

Dadurch werden ein Verfahren zur anonymisierten kontextgebundenen Authentifizierung einer Person mittels eines biometrischen Templates und ein System zur Durchführung des Verfahrens geschaffen, die eine biometrische Authentifizierung ohne Speichern von Daten, die die Identität der betreffenden Person betreffen, ermöglichen. Bei der Authentifizierung von Personen auf Basis biometrischer Merkmale ohne Feststellen der Identität der betreffenden Person wird ein Höchstmaß an Datenschutz und Datenkontrolle durch die betroffene Person gewährleistet. Dies wird dadurch erreicht, dass lediglich die für eine Verifikation einer Berechtigung, die die Person erlangen möchte, wie insbesondere eine Berechtigung zum (vereinfachten, da automatisierten, nicht händisch kontrollierten) Zutritt zu einer Veranstaltung oder einem Ort, erforderlichen Daten erfasst und temporär in ein biometrisches Template überführt werden. Das biometrische Template wird in ein strukturloses Bitmuster umgewandelt, das gespeichert wird. Eine vollständige Identifikation der Person ist mit den erfassten Daten nicht möglich, lediglich eine Authentifizierung zur Verifikation der jeweiligen Berechtigung, zu deren Zweck die Daten erfasst werden. Das Verfahren und das System dienen somit lediglich einer zweckgebundenen, anonymisierten Gesichtserkennung mit kontextgebundener Template-Rekonstruktion unter Einhalten des vollständigen Datenschutzes.

Die Person, die einen vereinfachten Zutritt benutzen möchte, entscheidet selbst, wie lange und wo ihre Daten benutzt werden sollen. Diese Daten werden durch die Umwandlung des biometrischen Templates in ein strukturloses Bitmuster so geschützt, dass sie nicht rekonstruiert werden können. Das strukturlose Bitmuster wird temporär ausschließlich an der Station bzw. in dem Gerät gespeichert, an der bzw. in dem es entstanden ist. Die Speicherung erfolgt, im Unterschied zum Stand der Technik, in der Station bzw. dem Gerät nur temporär, also vorübergehend, zeitgebunden, wobei durch die Person vorab ein Gültigkeitszeitraum bzw. ein Gültigkeitsfenster festgelegt wird. Nur innerhalb des vorgegebenen Gültigkeitszeitraums bzw. Gültigkeitsfensters ist ein Entschlüsseln des strukturlosen Bitmusters, also eine Rekonstruktion des Templates, möglich, nach Ablauf des Gültigkeitszeitraums bzw. Gültigkeitsfensters hingegen nicht mehr.

Da für einen Zutritt beispielsweise zum Boarding an einem Flughafen oder zu einer Veranstaltung, wie einem Konzert, einem Fußballspiel, etc. keine Identifikation der Person erforderlich ist, sondern nur eine Authentifizierung ihrer Berechtigung zum Zutritt innerhalb der vorgegebenen Zeitspanne bzw. innerhalb des vorgegebenen Zeitfensters/Gültigkeitsfensters ist das Erfassen von Daten, die eine Identifikation der Person ermöglichen würden, nicht erforderlich.

Nach dem Erfassen eines Gesichtsbildes der Person, die den vereinfachten Zugang wünscht, in zumindest einer Einheit zur Erfassung biometrischer Daten wird in zumindest einer Verarbeitungseinheit zur Erzeugung eines biometrischen Templates aus den erfassten biometrischen Daten und Umwandlung in ein ungeordnetes, strukturloses Bitmuster zunächst ein biometrisches Template aus dem Gesichtsbild erstellt bzw. erzeugt und dieses in ein ungeordnetes, strukturloses Bitmuster überführt. Das strukturlose Bitmuster wird in zumindest einer Speichereinheit zur temporären Speicherung des Bitmusters gespeichert. Eine Rückführung des strukturlosen Bitmusters auf das ursprüngliche Template ist ohne kontextgebundene Parameter nicht möglich. Diese werden von der Person ausgewählt bzw. bestimmt und in dem Gerät bzw. an der Station gespeichert. Hierfür umfasst das System zumindest eine Einheit zum Erfassen und Speichern von kontextgebundenen Parametern. Es werden zumindest zwei kontextgebundene Parameter bestimmt und gespeichert, umfassend ein zeitliches Gültigkeitsfenster. Die vorbestimmten kontextgebundenen Parameter können durch die Person im Vorfeld individuell festgelegt werden.

Eine Verifikationsstation oder ein Verifikationsgerät dient zur Rekonstruktion des Templates und ist hierfür autorisiert. Eine temporäre Rekonstruktion des biometrischen Templates erfolgt nur bei Auftreten einer Authentifizierungsanfrage und nur dann, wenn zusätzlich die vorab bestimmten bzw. festgelegten kontextgebundenen Parameter korrekt vorliegen. Dies wird in dem zumindest einen Mittel zur Kontextprüfung und temporären Rekonstruktion des Templates aus dem Bitmuster durchgeführt. Die vorbestimmten kontextgebundenen Parameter umfassen vorteilhaft zumindest eine Geräte- oder Stationskennung zur Kennzeichnung zumindest eines zur Authentifizierung berechtigten Geräts oder zumindest einer zur Authentifizierung berechtigten Station und das zeitliche Gültigkeitsfenster für die Verwendung der erfassten Daten der Person, also ein Zeitfenster für die Gültigkeit mit Startzeit und Endzeit. Weiter vorteilhaft können sie einen nutzerspezifischen, durch die Person vorgebbaren Authentifikator umfassen. Die zumindest eine Geräte- oder Stationskennung zur Kennzeichnung zumindest eines zur Authentifizierung berechtigten Geräts oder zumindest einer zur Authentifizierung berechtigten Station kann eine Geräte-ID einer verifizierten Zielstation, an der eine Authentifizierung zugelassen wird, sein. Der durch die Person vorgebbare Authentifikator kann einen persönlichen PIN-Code der Person als Nutzer des Systems oder ein kryptografisches Einmal-Token umfassen.

Liegen die zumindest zwei vorbestimmten kontextgebundenen Parameter vor, wird das Template temporär aus dem Bitmuster rekonstruiert. Ferner wird ein Livebild der Person, die eine Authentifizierung wünscht, aufgenommen. Zu diesem Zweck umfasst das System zumindest eine Einheit zum Erfassen eines Livebildes. Im Anschluss wird ein Abgleich des rekonstruierten Templates mit dem aktuellen Livebild der Person zu deren Authentifizierung durchgeführt. Hierzu umfasst das System zumindest eine Auswerteeinheit zum biometrischen Abgleich des erfassten Livebildes mit dem rekonstruierten Template. Eine erfolgreiche Authentifizierung ist nur innerhalb des vorgegebenen zeitlichen Gültigkeitsfensters möglich, es wird also keine dauerhafte Identifikation der Person ermöglicht. Daher umfasst das System vorteilhaft zumindest eine Zeiterfassungseinheit zur aktuellen Zeiterfassung für die Kontextprüfung. Nach Ablauf des Gültigkeitsfensters erfolgt weiter vorteilhaft eine automatische Löschung des Bitmusters.

Der Abgleich des rekonstruierten Templates mit einem aktuellen Livebild der Person zu deren Authentifizierung kann weiter vorteilhaft Kl-basiert erfolgen, also eine Gesichtserkennung unter Einsatz künstlicher Intelligenz (KI), so dass die Authentifizierung hierdurch noch weiter verbessert und beschleunigt werden kann.

Die Authentifizierung erfolgt nicht zur Feststellung der Identität, sondern zur Überprüfung, ob die Person zu einem zuvor definierten Zweck autorisiert ist, wie z.B. beim Kauf eines Tickets für ein Event zum Zutritt zu dem Event, bei einem Boarding-Pass für einen Flug zum Boarding zu dem Flug.

Der Nutzer, also die Person, die einen vereinfachten, also automatisierten und nicht von einer Person manuell überprüften, Zutritt zu einem Ort oder einer Veranstaltung wünscht, legt beim Registrierungsprozess für diesen Zutritt fest, welche Geräte bzw. Stationen zur Nutzung berechtigt sind, für welchen Zeitraum bzw. welches Gültigkeitsfenster die Daten verwendet werden dürfen, ob z.B. ein PIN-Code oder ein anderer durch die Person vorgebbarer Authentifikator zur Authentifizierung erforderlich ist oder nicht und welcher Authentifikator, insbesondere PIN-Code. Nach Ablauf des Zeitraums bzw. Gültigkeitsfensters erfolgt automatisch eine Löschung des rekonstruierten Templates und des Bitmusters.

Die Entschlüsselung des Bitmusters ist ohne Kombination aller kontextgebundener Parameter rechnerisch nicht möglich. Es erfolgt somit eine Verschlüsselung des erfassten biometrischen Templates nach den Zero-Knowledge-Prinzipien und eine verschlüsselte Verarbeitung innerhalb einer geschützten Hardware, wie z.B. TEE/Secure Enclave.

Das Verfahren ist vorteilhaft auf einem Computer implementiert. Ein Computerprogrammprodukt mit computerlesbarem Programmcode ermöglicht es, dass der Programmcode bei seiner Ausführung auf dem Computer letzteren dazu veranlasst, das Verfahren auszuführen.

Im Unterschied zum Stand der Technik wird gemäß der vorliegenden Erfindung kein Datensatz zentral gespeichert, der dauerhaft biometrische Informationen enthält. Ferner wird die mögliche Angriffsfläche auf die erfassten Daten der Person durch kontextgebundene und temporäre Freigabe der Daten minimiert. Ferner wird eine erhöhte Privatsphäre durch Vermeidung der Identifikation der Person geschaffen. Es kann somit eine vollständige Nutzersouveränität der Person über ihre eigenen biometrische Daten sichergestellt werden. Daher können das Verfahren und das System besonders vorteilhaft in sicherheitskritischen, datenschutzsensiblen Umgebungen eingesetzt werden.

Zur näheren Erläuterung der Erfindung wird ein Ausführungsbeispiel von dieser anhand der Zeichnung beschrieben. Diese zeigt in:

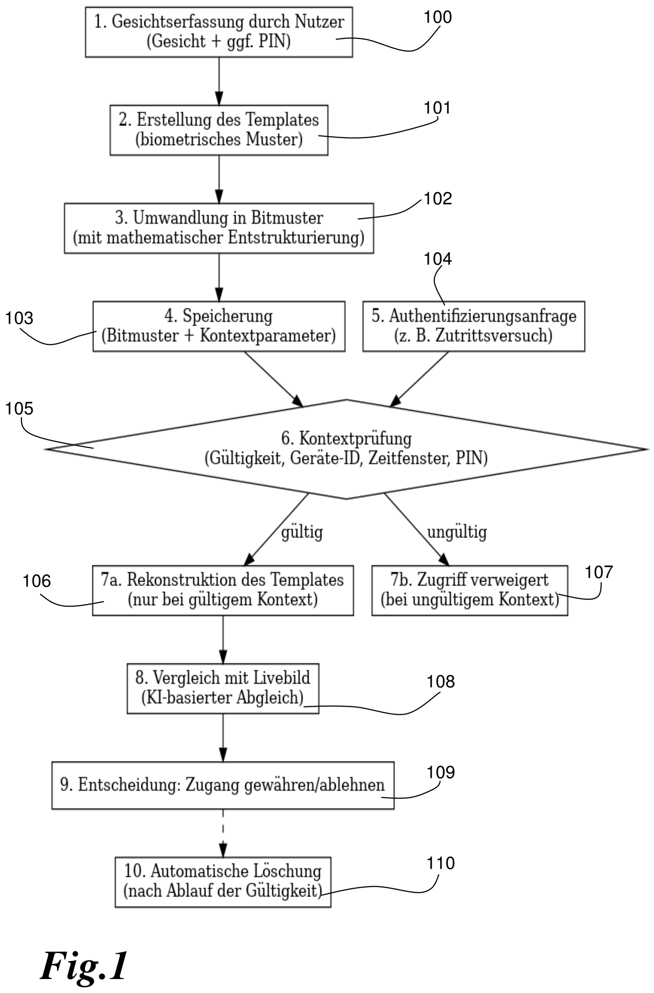

- Figur 1: ein Flussdiagramm zur Darstellung des Ablaufs eines erfindungsgemäßen Verfahrens zur kontextgebundenen Gesichtsauthentifizierung einer Person mit temporärer Rekonstruktion eines erzeugten biometrischen Templates.

In Figur 1 ist der Ablauf einer kontextgebundenen Gesichtsauthentifizierung des Gesichts einer Person mit temporärer Rekonstruktion eines biometrischen Templates von deren Gesicht gezeigt. Hierbei wird bzw. werden in einem ersten Schritt, einem Erfassungsschritt 100, durch einen Nutzer, also eine Person, deren Gesicht bzw. biometrische Gesichtsdaten erfasst. Zudem kann der Nutzer/die Person ein PIN-Code als einen kontextgebundenen Parameter vorgeben, der später für die Gesichtsauthentifizierung genutzt werden soll. In einem zweiten Schritt, einem Template-Erzeugungsschritt 101, wird aus den erfassten biometrischen Gesichtsdaten der Person ein biometrisches Template bzw. ein biometrisches Muster erstellt. In einem dritten Schritt, einem Umwandlungsschritt 102, wird das biometrische Template in ein strukturloses Bitmuster umgewandelt. Hierbei erfolgt eine mathematische Entstrukturierung des biometrischen Templates. In einem vierten Schritt, einem Speicherschritt 103, werden das strukturlose Bitmuster und kontextgebundene Parameter, die der Nutzer/die Person auswählt bzw. die sich aus dem Anlass/Zweck der später gewünschten Authentifizierung ergeben, ebenfalls gespeichert. Die kontextgebundenen Parameter können eine Geräte- oder Stationskennung zur Kennzeichnung des zur späteren Authentifizierung berechtigten Geräts oder der zur späteren Authentifizierung berechtigten Station, ein Tag bzw. Zeitpunkt und ein zeitliches Gültigkeitsfenster für die Verwendung der erfassten Daten der Person sein.

Erfolgt im nächsten Schritt eine Authentifizierungsanfrage 104, z.B. bei einem Zutrittsversuch durch die Person, die an einen bestimmten Ort bzw. zu einer Veranstaltung Zutritt wünscht, wird in einem weiteren Schritt, einem Kontextprüfungsschritt 105, überprüft, ob die zuvor festgelegten und gespeicherten kontextgebundenen Parameter vorliegen. Geprüft wird in diesem Kontextprüfungsschritt 105 somit insbesondere, ob die Authentifizierungsanfrage 104 innerhalb an dem vorab angegebenen Tag und innerhalb des vorab festgelegten Gültigkeitsfensters, wie einer Zeitspanne an dem Tag, vorliegt, ob es sich um die korrekte Gerätekennung/Geräte-ID handelt, ob der von der Person nun eingegebene PIN-Code korrekt ist, also mit dem von ihr bei Erfassen des Gesichtsbildes im Erfassungsschritt 100 eingegebenen PIN-Code übereinstimmt. Ergibt die Kontextprüfung im Kontextprüfungsschritt 105, dass die kontextgebundenen Parameter korrekt vorliegen, erfolgt in einem Rekonstruktionsschritt 106 die Rekonstruktion des biometrischen Templates aus dem strukturlosen Bitmuster. Ergibt die Kontextprüfung im Kontextprüfungsschritt 105 hingegen, dass die kontextgebundenen Parameter nicht korrekt vorliegen, wird der Zugriff oder Zutritt verweigert. Die Zugriffsverweigerung ist in Figur 1 durch das Bezugszeichen 107 gekennzeichnet. Die Person gelangt somit nicht an den Ort bzw. zu der Veranstaltung.

War die Kontextprüfung hingegen erfolgreich, wird ein Livebild der Person erfasst und in einem Abgleichschritt 108 ein Vergleich des Livebildes mit dem rekonstruierten Template vorgenommen. Insbesondere kann der Abgleich KIbasiert erfolgen. Das beim Abgleich ermittelte Ergebnis führt im nächsten Schritt, einem Entscheidungsschritt 109, dazu, dass der Person entweder der Zutritt oder Zugang gewährt oder verweigert, also abgelehnt wird. Nach Ablauf der Gültigkeit, also dem Überschreiten der Endzeit des Gültigkeitsfensters, wird in einem Löschschritt 110 automatisch das rekonstruierte Template bzw. das Bitmuster gelöscht.

Beispielsweise kann sich ein Konzertbesucher für den Einlass per Gesichtserkennung registrieren. Beim Kauf des Tickets für das Konzert stimmt er der Verwendung seines Gesichtsbildes zu. Es wird ein Gesichtstemplate, also ein biometrisches Template seines Gesichts, von ihm erfasst und sofort in ein strukturloses Bitmuster umgewandelt. Der Konzertbesucher gibt ferner z.B. als kontextgebundene Parameter an, dass sein Ticket nur für den Einlass am 14.06.2025 zwischen 17:00 und 22:00 Uhr, z.B. nur am Einlassgate Südtor, mit beispielsweise der PIN 2941 gültig ist. Will der Konzertbesucher das Konzert besuchen, wird am 14.06.2025 in der Zeit zwischen 17:00 und 22:00 Uhr an der Einlasskontrollstation am Einlassgate Südtor das strukturlose Bitmuster temporär in das Template rekonstruiert, ein Livebild des Konzertbesuchers erfasst und ein biometrischer Abgleich des erfassten Livebildes mit dem rekonstruierten Template vorgenommen. Wenn die Berechtigung des Konzertbesuchers zum Einlass zu diesem Konzert festgestellt wird, wird ihm der Zutritt gewährt. Danach verfällt die Nutzbarkeit des Templates automatisch, spätestens nach Ablauf des Gültigkeitsfensters des 14.06.2025, 17:00 bis 22:00 Uhr erfolgt eine automatische Löschung des strukturlosen Bitmusters.

Neben den im Vorstehenden beschriebenen und in den Figuren gezeigten Ausführungsformen eines Verfahren zur anonymisierten kontextgebundenen Authentifizierung einer Person mittels eines biometrischen Templates und eines Systems zur Durchführung des Verfahrens können noch zahlreiche weitere gebildet werden, insbesondere auch beliebige Kombinationen der Merkmale von diesen, wobei zunächst ein Gesichtsbild der Person erfasst, ein biometrisches Template aus dem Gesichtsbild erzeugt wird, das Template in ein ungeordnetes, strukturloses Bitmuster umgewandelt wird, das Bitmuster gespeichert wird, zumindest zwei kontextgebundene Parameter, umfassend ein zeitliches Gültigkeitsfenster, bestimmt und gespeichert werden, bei Auftreten einer Authentifizierungsanfrage die zumindest zwei vorbestimmten kontextgebundenen Parameter abgefragt werden, bei Vorliegen der zumindest zwei vorbestimmten kontextgebundenen Parameter das Template temporär aus dem Bitmuster rekonstruiert wird und ein Abgleich des rekonstruierten Templates mit einem aktuellen Livebild der Person zu deren Authentifizierung durchgeführt wird, wobei eine erfolgreiche Authentifizierung nur innerhalb des vorgegebenen zeitlichen Gültigkeitsfensters ermöglicht ist, also das Verfahren keine dauerhafte Identifikation des Nutzers ermöglicht.

### Bezugszeichenliste

- 100: Erfassungsschritt
- 101: Template-Erzeugungsschritt
- 102: Umwandlungsschritt
- 103: Speicherschritt
- 104: Authentifizierungsanfrage
- 105: Kontextprüfungsschritt
- 106: Rekonstruktionsschritt
- 107: Zugriffsverweigerung
- 108: Abgleichschritt
- 109: Entscheidungsschritt
- 110: Löschschritt

## Patentansprüche

1. Verfahren zur anonymisierten kontextgebundenen Authentifizierung einer Person mittels eines biometrischen Templates, umfassend die Schritte:
a) Erfassen eines Gesichtsbildes der Person,
b) Erzeugen eines biometrischen Templates aus dem Gesichtsbild,
c) Umwandeln des Templates in ein ungeordnetes, strukturloses Bitmuster,
d) Speichern des Bitmusters,
e) Bestimmen und Speichern zumindest zweier kontextgebundener Parameter, umfassend ein zeitliches Gültigkeitsfenster,
f) bei Auftreten einer Authentifizierungsanfrage Abfrage der zumindest zwei vorbestimmten kontextgebundenen Parameter,
g) bei Vorliegen der zumindest zwei vorbestimmten kontextgebundenen Parameter temporäres Rekonstruieren des Templates aus dem Bitmuster, und
h) Durchführen eines Abgleichs des rekonstruierten Templates mit einem aktuellen Livebild der Person zu deren Authentifizierung, wobei eine erfolgreiche Authentifizierung nur innerhalb des vorgegebenen zeitlichen Gültigkeitsfensters ermöglicht ist.

2. Verfahren nach Anspruch 1,
**dadurch gekennzeichnet, dass**
nach Ablauf des Gültigkeitsfensters eine automatische Löschung des Bitmusters erfolgt.

3. Verfahren nach Anspruch 1 oder 2,
**dadurch gekennzeichnet, dass**
die vorbestimmten kontextgebundenen Parameter zumindest eine Geräte- oder Stationskennung zur Kennzeichnung zumindest eines zur Authentifizierung berechtigten Geräts oder zumindest einer zur Authentifizierung berechtigten Station, ein zeitliches Gültigkeitsfenster für die Verwendung der erfassten Daten der Person und einen nutzerspezifischen, durch die Person vorgebbaren Authentifikator umfassen.

4. Verfahren nach einem der vorstehenden Ansprüche,
**dadurch gekennzeichnet, dass**
die vorbestimmten kontextgebundenen Parameter durch die Person im Vorfeld individuell festgelegt werden.

5. Verfahren nach Anspruch 3 oder 4,
**dadurch gekennzeichnet, dass**
der durch die Person vorgebbare Authentifikator einen PIN-Code oder ein kryptografisches Einmal-Token umfasst.

6. Verfahren nach einem der Ansprüche 3 bis 5,
**dadurch gekennzeichnet, dass**
die zumindest eine Geräte- oder Stationskennung zur Kennzeichnung zumindest eines zur Authentifizierung berechtigten Geräts oder zumindest einer zur Authentifizierung berechtigten Station eine Geräte-ID einer verifizierten Zielstation, an der eine Authentifizierung zugelassen wird, ist.

7. Verfahren nach einem der vorstehenden Ansprüche,
**dadurch gekennzeichnet, dass**
der Abgleich des rekonstruierten Templates mit einem aktuellen Livebild der Person zu deren Authentifizierung Kl-basiert erfolgt.

8. System zur Durchführung des Verfahrens nach einem der vorstehenden Ansprüche, umfassend:
a) zumindest eine Einheit zur Erfassung biometrischer Daten,
b) zumindest eine Verarbeitungseinheit zur Erzeugung eines biometrischen Templates aus den erfassten biometrischen Daten und Umwandlung in ein ungeordnetes, strukturloses Bitmuster,
c) zumindest eine Speichereinheit zur temporären Speicherung des Bitmusters,
d) zumindest eine Einheit zum Erfassen und Speichern von kontextgebundenen Parametern,
e) eine Verifikationsstation oder ein Verifikationsgerät, die oder das zur Rekonstruktion des Templates autorisiert ist,
f) zumindest ein Mittel zur Kontextprüfung und temporären Rekonstruktion des Templates aus dem Bitmuster,
g) zumindest eine Einheit zum Erfassen eines Livebildes, und
h) zumindest eine Auswerteeinheit zum biometrischen Abgleich des erfassten Livebildes mit dem rekonstruierten Template.

9. System nach Anspruch 8,
**dadurch gekennzeichnet, dass**
das System zumindest eine Zeiterfassungseinheit zur aktuellen Zeiterfassung für die Kontextprüfung umfasst.

10. Computerprogrammprodukt mit computerlesbarem Programmcode, der bei dessen Ausführung auf einem Computer diesen dazu veranlasst, das Verfahren nach einem der Ansprüche 1 bis 7 auszuführen.
